# EUROPÄISCHE PATENTANMELDUNG

(11) **EP 1 528 335 A2**
(43) Veröffentlichungstag der Anmeldung: **04.05.2005**
(21) Anmeldenummer: 04025753.7
(22) Anmeldetag: 29.10.2004
(51) Int. Cl.: F24J 2/05

(54) **Vakuum-Solarröhre**

(30) Priorität: 31.10.2003 DE 10350860
(71) Anmelder: Lenz Laborglas GmbH & Co. KG, 97877 Wertheim (DE)
(72) Erfinder: Lenz, Eckhart, 97877 Wertheim (DE)
(74) Vertreter: Zinnecker, Armin, Dipl.-Ing.

(57) **Zusammenfassung**

Um eine Vakuum-Solarröhre zu verbessern, umfasst diese einen Glaskörper (1) und einen Absorber (2). Der Glaskörper umfasst einen Rohrkörper (3), ein zentrales Rohr (4), eine hintere Endfläche (5) und eine vordere Endfläche (6). Der Absorber (2) umschließt das zentrale Rohr (4) (Fig. 1).

## Beschreibung

Die Erfindung betrifft eine Vakuum-Solarröhre.

Eine bekannte Vakuum-Solarröhre besteht aus einem zylindrischen, beidseitig offenen Glaskörper, der an beiden Enden durch Endscheiben abgedichtet ist. Eine dauerhafte Abdichtung ist allerdings nicht möglich, so dass sich das in der Solarröhre erzeugte Vakuum im Lauf der Zeit auffüllt, wodurch die Vakuum-Solarröhre in ihrem Wirkungsgrad nachlässt und unbrauchbar wird.

Aufgabe der Erfindung ist es, eine verbesserte Vakuum-Solarröhre vorzuschlagen.

Die Lösung dieser Aufgabe erfolgt durch eine Vakuum-Solarröhre mit den Merkmalen des Anspruchs 1. Es handelt sich um eine Vakuum-Solarröhre mit einem Glaskörper, der einen Rohrkörper, ein zentrales Rohr, eine hintere Endfläche und eine vordere Endfläche umfasst, und mit einem Absorber, der das zentrale Rohr umschließt. In dem Glaskörper wird ein Vakuum erzeugt, beispielsweise mit einem Druck von 0,0001 bar. Das Vakuum ist in dem Ringraum vorhanden, der außen von dem Rohrkörper und innen von dem zentralen Rohr begrenzt wird. Das Vakuum kann während der Herstellung des Glaskörpers erzeugt werden.

Gemäß der Erfindung ist der gesamte Raum oder Ringraum, in dem das Vakuum vorhanden ist, vollständig von Glas umgeben. Eine Dichtung zwischen einem Glasbestandteil und einem sonstigen Bauteil wie beispielsweise einem Deckel ist nicht erforderlich. Hierdurch ist gewährleistet, dass das Vakuum dauerhaft vorhanden ist, so dass die Vakuum-Solarröhre dauerhaft ihre Aufgabe erfüllen kann.

Vorteilhafte Weiterbildungen sind in den Unteransprüchen beschrieben.

Der Absorber umfasst vorzugsweise ein Absorberrohr. Hierdurch kann ein guter Wärmeübergang von dem Absorberrohr auf das zentrale Rohr des Glaskörpers gewährleistet werden, wodurch der Wärmeübergang vom Absorber auf das Wärmeträgermedium verbessert wird.

Das Absorberrohr ist vorzugsweise geschlitzt und/oder durchbrochen. Bei dem Schlitz handelt es sich vorzugsweise um einen durchgehenden Längsschlitz. Vorteilhaft ist es, wenn das geschlitzte Absorberrohr leicht vorgespannt ist, wenn also sein Innendurchmesser zunächst etwas kleiner ist als der Außendurchmesser des zentralen Rohrs des Glaskörpers. Zur Montage wird dann das geschlitzte Absorberrohr zunächst geringfügig aufgeweitet und in diesem Zustand über das zentrale Rohr geschoben. Dort legt es sich dann aufgrund seiner Vorspannung fest an das zentrale Rohr an, wodurch ein großflächiger Kontakt gewährleistet ist, der einen guten Wärmeübergang zwischen dem Absorberrohr und dem zentralen Rohr gewährleistet.

Das Absorberrohr kann in der Weise durchbrochen sein, daß es das zentrale Rohr abschnittsweise auf gegenüberliegenden Seiten umgreift.

Nach einer weiteren vorteilhaften Weiterbildung erstreckt sich das Absorberrohr über einen Winkelbereich von mehr als 180°. Vorzugsweise ist der Winkelbereich, über den sich das Absorberrohr erstreckt, derart bemessen, daß das Absorberrohr aufgeweitet und über das zentrale Rohr geschoben werden kann, wo es dann zuverlässig sitzt.

Der Absorber kann eine oder mehrere Finnen umfassen. Vorzugsweise sind zwei einander gegenüberliegende Finnen vorgesehen. Die Finnen können oberflächenbeschichtet sein. Hierbei ist es vorteilhaft, wenn nur jeweils eine Oberfläche beschichtet ist, nämlich diejenige Oberfläche, auf die die Strahlung bzw. Sonnenstrahlung auftrifft. Als Beschichtungsmaterial ist Zinox oder ein sonstiges lichtabsorbierendes Beschichtungsmaterial geeignet.

Eine weitere vorteilhafte Weiterbildung istgekennzeichnet durch eine oder mehrere Klammern, die den Absorber oder das Absorberrohr umgreifen und die an dem Rohrkörper anliegen. Vorzugsweise liegen die Klammern an mehreren Punkten an der Innenseite des Rohrkörpers an. Für eine stabile Lagesicherung ist es vorteilhaft, wenn die Klammern an jeweils mindestens drei Punkten an der Innenseite des Rohrkörpers anliegen. Vorzugsweise liegen sie an drei Punkten an. Hierdurch ist eine stabile Lage mit minimalem Aufwand gewährleistet.

Die Klammern können durch eine oder mehrere Finnen hindurchgeführt sein. Hierdurch wird die stabile Lage des Absorbers in dem Glaskörper verbessert.

Eine weitere vorteilhafte Weiterbildung ist gekennzeichnet durch einen Halter, der den Absorber oder dessen Finnen einfaßt und der an dem Rohrkörper anliegt. Durch die Einfassungen des Halters wird eine Lagesicherung des Absorbers bewirkt.

Der Halter kann mehrere Haltearme aufweisen. Vorzugsweise liegen die Enden der Haltearme an der Innenseite des Rohrkörpers an. Für eine stabile Lagesicherung ist es vorteilhaft, wenn der Halter mindestens drei an der Innenseite des Rohrkörpers anliegende Haltearme aufweist.

Nach einer weiteren vorteilhaften Weiterbildung sind an dem Halter oder an einem oder mehreren oder allen der Haltearme des Halters Laschen vorgesehen. Durch diese Laschen können Einfassungen für den Absorber oder dessen Finnen gebildet werden.

Eine weitere vorteilhafte Weiterbildung ist dadurch gekennzeichnet, dass in das Ende des zentralen Rohres ein Anschlussstück einsetzbar oder eingesetzt ist. Vorzugsweise ist das Ende des zentralen Rohres erweitert. Das Anschlussstück kann lösbar oder fest eingesetzt sein. Vorzugsweise ist es lösbar eingesetzt. Ferner ist das Anschlussstück vorzugsweise dichtend eingesetzt.

Vorteilhaft ist es, wenn das Anschlussstück in das Ende des zentralen Rohres einklemmbar ist, wobei es vorzugsweise dichtend eingeklemmt ist.

Das Anschlussstück kann einen aufweitbaren Schlauch umfassen. Der Schlauch kann aus Silikon hergestellt sein. Auch andere elastische und dichtende Materialien sind mit Vorteil anwendbar. Der aufweitbare Schlauch liegt am Ende des zentralen Rohrs dichtend an.

Eine weitere vorteilhafte Weiterbildung ist dadurch gekennzeichnet, dass der aufweitbare Schlauch zwischen einem Anschlag und einer Mutter vorgesehen ist. Vorzugsweise handelt es sich um eine Schlitzmutter. Es sind aber auch andere verstellbare Teile möglich. Der aufweitbare Schlauch ist auf diese Weise zwischen dem Anschlag und der Mutter einklemmbar oder eingeklemmt. Bei dem Anschlag kann es sich ebenfalls um eine Mutter handeln.

Nach einer weiteren vorteilhaften Weiterbildung ist in Verlängerung des zentralen Rohres ein Anschlußteil vorgesehen. Das Anschlußteil weist vorzugsweise ein Außengewinde auf, mit dem eine Kappe verschraubt werden kann, in der ein Anschlußstutzen vorgesehen sein kann.

Ausführungsbeispiele der Erfindung werden nachstehend anhand der beigefügten Zeichnung im einzelnen erläutert. In der Zeichnung zeigt
- Fig. 1: eine Vakuum-Solarröhre in einem Längsschnitt,
- Fig. 2: einen Querschnitt längs der Linie J-J in Fig. 1,
- Fig. 3: eine Seitenansicht der Solarröhre,
- Fig. 4: eine vergrößerte Darstellung der Einzelheit Y in Fig. 1,
- Fig. 5: eine vergrößerte Darstellung der Einzelheit Z in Fig. 1,
- Fig. 6: eine perspektivische Darstellung der Vakuum-Solarröhre,
- Fig. 7: eine perspektivische Darstellung der Vakuum-Solarröhre ohne Rohrkörper,
- Fig. 8: eine Abwandlung einer Vakuum-Solarröhre in einem der Fig. 1 entsprechenden Längsschnitt,
- Fig. 9: eine zweite Ausführungsform einer Vakuum-Solarröhre in einem Längsschnitt,
- Fig. 10: einen Querschnitt längs der Linie B-B in Fig. 9,
- Fig. 11: eine vergrößerte Darstellung der Einzelheit Z in Fig. 9,
- Fig. 12: eine vergrößerte Darstellung der Einzelheit Y in Fig. 9,
- Fig. 13: eine perspektivische Darstellung des Absorbers der Ausführungsform gemäß Fig. 9 - 12,
- Fig. 14: eine dritte Ausführungsform einer Vakuum-Solarröhre in einem Längsschnitt,
- Fig. 15: einen Querschnitt längs der Linie A-A in Fig. 14 und
- Fig. 16: einen Querschnitt längs der Linie B-B in Fig. 14.

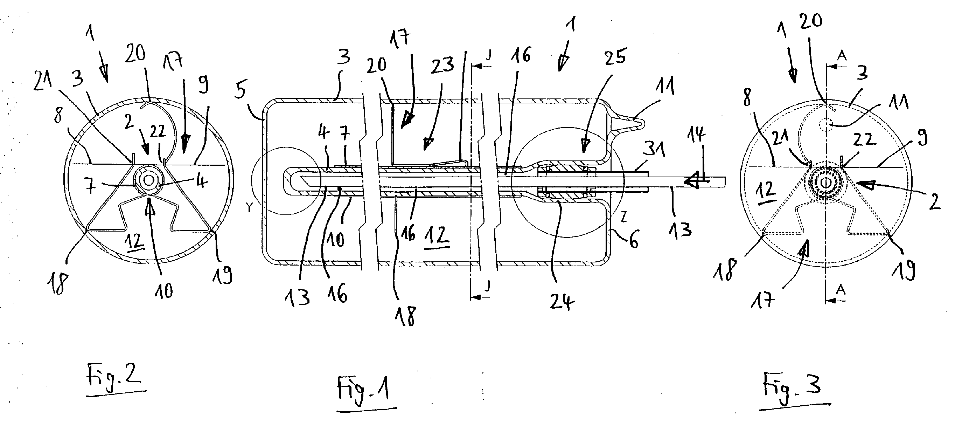

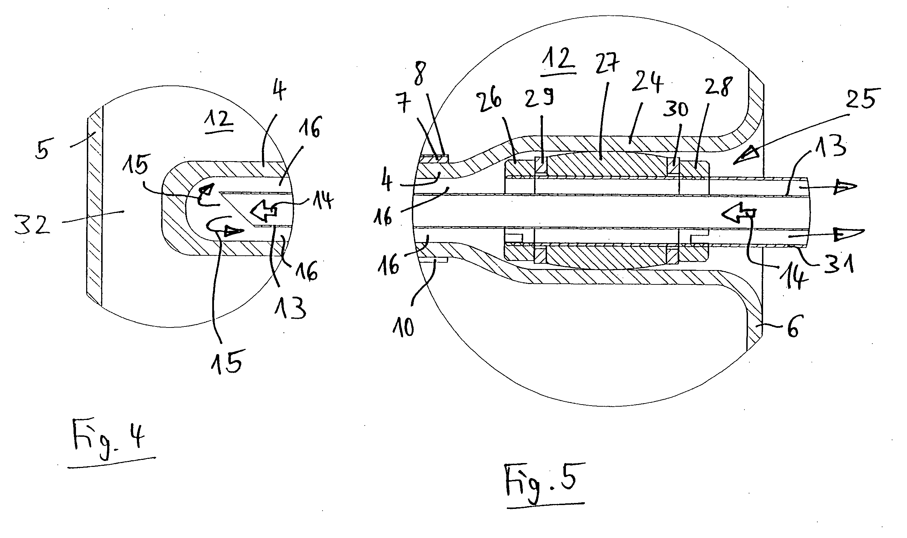

Die in den Fig. 1 - 7 dargestellte Vakuum-Solarröhre umfasst einen Glaskörper 1 und einen Absorber 2. Der Glaskörper 1 umfasst eine Rohrkörper 3, ein zentrales Rohr 4, eine hintere Endfläche 5 und eine vordere Endfläche 6. Der Absorber 2 umschließt das zentrale Rohr 4.

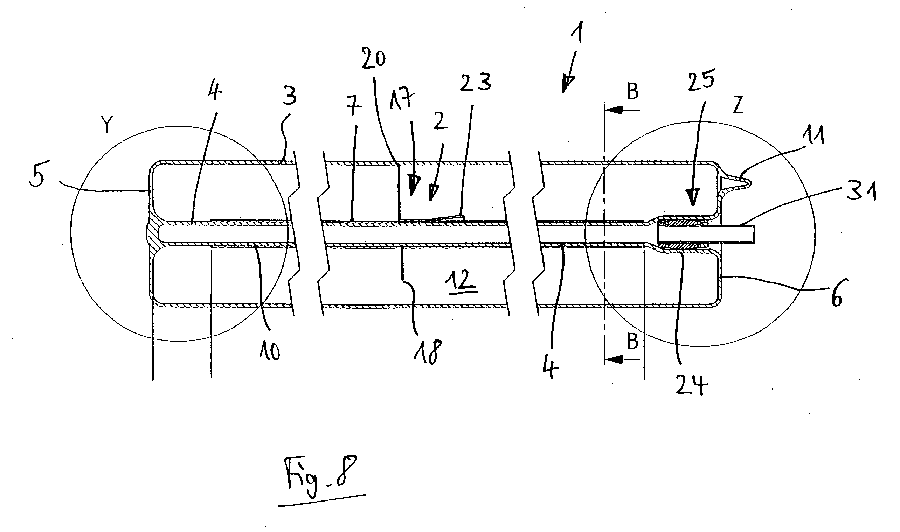

Der Absorber 2 umfasst ein Absorberrohr 7 und zwei Finnen 8, 9, die einander gegenüberliegen. Die Finnen 8, 9 bilden eine Ebene, die tangential zu dem Absorberrohr 7 verläuft. Die Finnen 8, 9 sind auf ihrer in Fig. 7 oben gezeigten Fläche mit Zinox beschichtet. Das Absorberrohr 7 weist einen durchgehenden Längsschlitz 10 auf, ist also geschlitzt.

Bei der Herstellung des Glaskörpers wird das Absorberrohr 7 aufgeweitet und über das zentrale Rohr 4 des Glaskörpers 1 geschoben. Im Bereich des Pumpstutzens 11, der in der vorderen Endfläche 6 liegt, bleibt der Glaskörper 1 zunächst offen. Durch den Pumpstutzen hindurch wird Luft aus der Vakuum-Solarröhre herausgepumpt, bis der dem zu erzeugenden Vakuum entsprechende Druck erreicht ist. Dann wird der Pumpstutzen 11 geschlossen, so dass er die aus Fig. 1 ersichtliche Form erhält. Der Ringraum 12, der zwischen der Innenfläche des Rohrkörpers 3, der Außenfläche des zentralen Rohrs 4, der hinteren Endfläche 5 und der vorderen Endfläche 6 liegt und in dem das erzeugte Vakuum herrscht, ist damit vollständig von einem einzigen Glaskörper 1 umgeben. Abzudichtende Bestandteile sind nicht vorhanden, so dass das Vakuum in dem Ringraum 12 dauerhaft erhalten bleibt.

Das geschlitzte Absorberrohr 7 liegt allseits fest an dem zentralen Rohr 4 an. Hierdurch ist ein guter Wärmeübergang gewährleistet. Die Sonnenstrahlung erwärmt die mit Zinox beschichteten Oberflächen der Finnen 8, 9, die die Wärme an das Absorberrohr 7 weiterleiten. Der Absorber 2 besteht aus einem gut wärmeleitenden Material, vorzugsweise aus Kupfer. Die Finnen 8, 9 sind vorzugsweise an das Absorberrohr 7 geschweißt, vorzugsweise ultraschallgeschweißt. Vom Absorberrohr 7 wird die Wärme auf das zentrale Rohr 4 übertragen, das die Wärme auf das innerhalb des zentralen Rohrs 4 strömende Wärmeträgermedium, vorzugsweise Wasser, überträgt.

In das zentrale Rohr 4 wird ein Rohr 13 eingebracht, durch welches das Wärmeträgermedium strömt. Der Zulauf des Wärmeträgermediums erfolgt durch das Rohr 13 in Richtung des Pfeils 14 in die Vakuum-Solarröhre hinein bis zum geschlossenen inneren Ende des zentralen Rohrs 4. Dort tritt das Wärmeträgermedium aus dem Rohr 13 aus. Es wird durch das geschlossene innere Ende des zentralen Rohres 4 umgeleitet, wie durch die Pfeile 15 angedeutet, und in den Ringraum 16 zwischen der inneren Oberfläche des zentralen Rohrs 4 und der äußeren Oberfläche des Rohrs 13 geleitet, den es in entgegengesetzter Richtung durchströmt. Auf diesem Strömungsweg aus der Vakuum-Glasröhre heraus, zwischen dem zentralen Rohr 4 und dem Rohr 13, nimmt das Wärmeträgermedium Wärme von dem zentralen Rohr 4 auf, die es nach außen abtransportiert, wo diese Wärme dann genutzt werden kann. Die Strömungsrichtung kann allerdings auch umgekehrt verlaufen.

Üblicherweise werden mehrere Vakuum-Solarröhren zusammengeschaltet, und zwar parallel und/oder in Reihe. Die in das Wärmeträgermedium eingebrachte Wärme kann dann genutzt werden, insbesondere zur Warmwasserbereitung.

Das in den Ringraum 12 eingebrachte Vakuum ist für eine gute Isolation der genutzten Wärmeübertragung erforderlich. Andernfalls würde die Wärme, die in dem Absorber 2 bzw. den Finnen 8, 9 aufgrund der absorbierten Sonnenstrahlung entsteht, über die in dem Ringraum 12 vorhandene Luft abgeleitet werden. Im allgemeinen ist ein Vakuum mit einem Druck von 0,0001 bar ausreichend. Je nach Anwendungsfall kann das Vakuum allerdings auch einen geringeren oder höheren Druck aufweisen.

Der Absorber 2 wird in dem Glaskörper 1 durch Klammern 17 fixiert. In einem Anwendungsfall sind drei Klammern in einem zwei Meter langen Glaskörper vorhanden. Jede Klammer 17 besteht aus einem gebogenen Draht, der an drei jeweils um 120° versetzten Stellen 18, 19, 20 an der Innenfläche des Rohrkörpers 3 anliegt.

Dabei ist der Draht mit einer entsprechenden Vorspannung gebogen. Eine Ecke des Drahtes liegt in dem Längsschlitz 10. Jede Finne 8, 9 weist eine Öffnung 21, 22 auf, die von dem Draht der Klammer 17 durchschritten wird. Im Bereich der Öffnungen 21, 22 weist der Draht der Klammer eine in Längsrichtung verlaufende Schleife 23 auf.

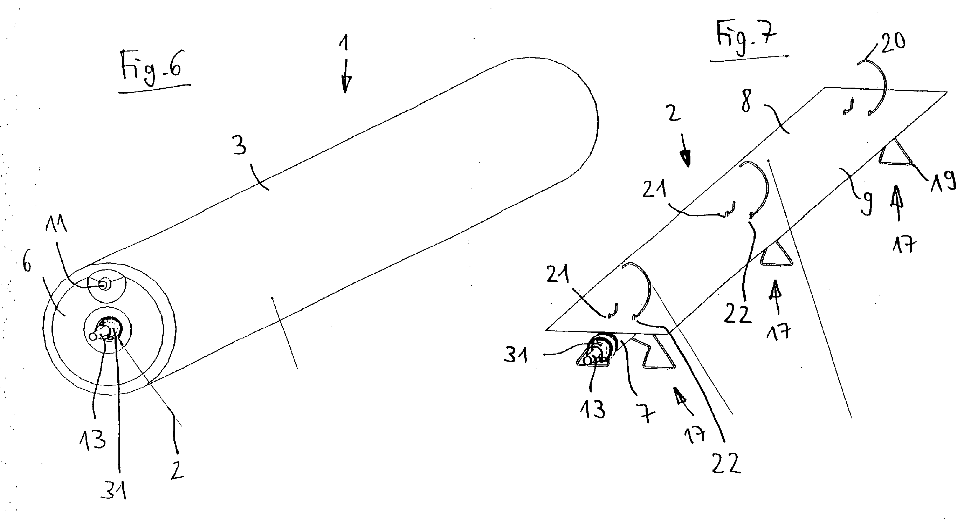

Im Bereich der vorderen Endfläche 6 ist das Ende 24 des zentralen Rohrs 4 erweitert. In dieses Ende 24 des zentralen Rohres 4 ist ein Anschlussstück 25 eingesetzt. Das Anschlussstück 25 ist in das Ende 24 des zentralen Rohrs 4 dichtend eingeklemmt. Es umfasst einen von einer Schlitzmutter gebildeten Anschlag 26, einen Silikonschlauch 27 und eine Schlitzmutter 28. Zwischen dem Anschlag 26 und dem Silikonschlauch 27 ist eine Scheibe 29 aus einem den Silikonschlauch 27 schützenden Material, beispielsweise eine Teflonscheibe eingesetzt. Eine entsprechende Scheibe 30 bzw. Teflonscheibe befindet sich zwischen der Schlitzmutter 28 und dem Silikonschlauch 27. Die den Anschlag 26 bildende Schlitzmutter und die Schlitzmutter 28 sind auf ein Außengewinde eines Anschlussstutzens 31 aufgeschraubt. Dazwischen befindet sich der Silikonschlauch 27. Wenn die Schlitzmutter 28 zum Anschlag 26 hin verschraubt wird, wird der Silikonschlauch 27 gespannt. Er wird zusammengestaucht, bis er in der insbesondere aus Fig. 5 ersichtlichen Weise ballig an der inneren Fläche des erweiterten Endes 24 des zentralen Rohrs 4 dichtend anliegt.

In der Fig. 8 ist eine Abwandlung der Vakuum-Solarröhre gezeigt, bei der übereinstimmende Teile mit denselben Bezugszeichen versehen sind. Der Unterschied zur Vakuum-Solarröhre gemäß Fig. 1 - 7 besteht darin, dass das Ende des zentralen Rohres 4 mit der hinteren Endfläche 5 verbunden bzw. verschmolzen ist. Hierdurch ist der Ringraum 12 als vollständiger, torusförmiger Ringraum ausgestaltet, während er bei der Ausführungsform nach Fig. 1 - 7 eine zwischen dem inneren Ende des zentalen Rohres 4 und der hinteren Endfläche 5 liegende Verbindung 32 aufweist.

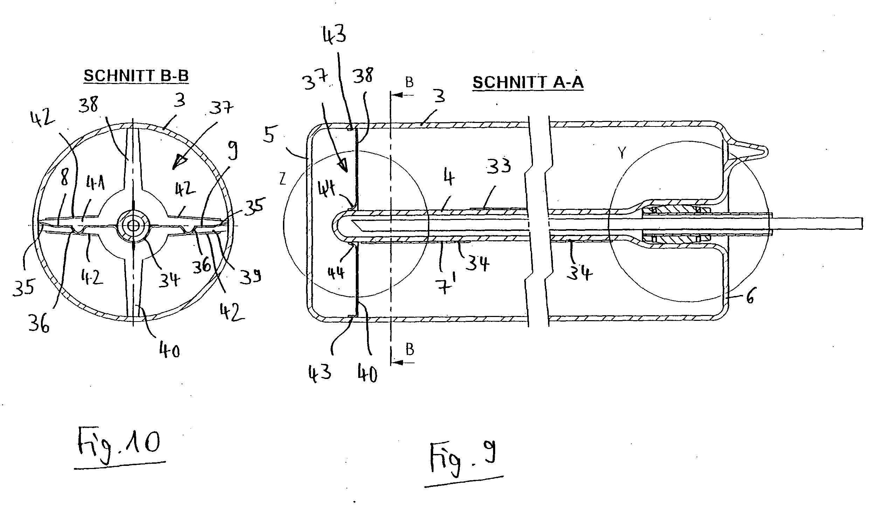

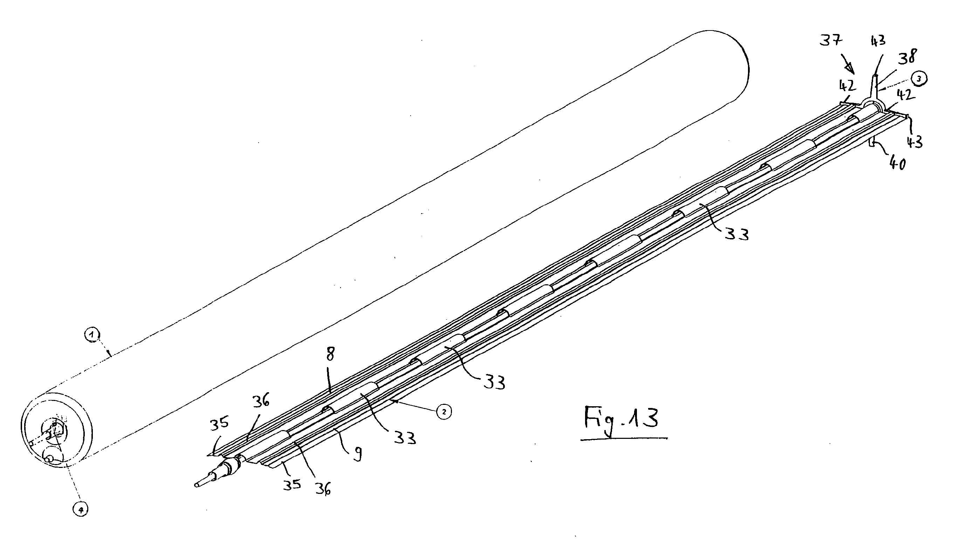

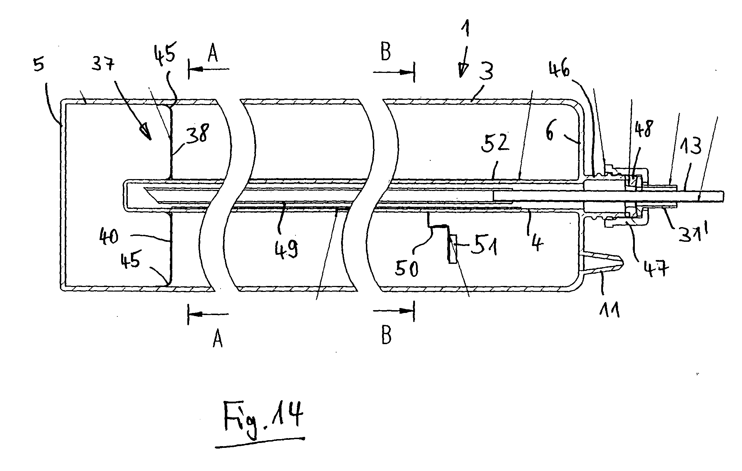

Die in Fig. 9 - 13 dargestellte, zweite Ausführungsform entspricht weitgehend derjenigen der Figuren 1 bis 7, so daß im folgenden übereinstimmende Teile nicht erneut beschrieben werden. Bei der Ausführungsform nach Fig. 9 - 13 ist das Absorberrohr 7' durchbrochen, und zwar derart, daß dieses Absorberrohr 7' das zentrale Rohr 4 abschnittsweise auf gegenüberliegenden Seiten umgreift. Dementsprechend weist das Absorberrohr 7' voneinander beabstandete, obere Abschnitte 33 auf, die sich über einen Winkelbereich von im wesentlichen 180° erstrecken und zwischen denen untere Abschnitte 34, die sich ebenfalls über einen Winkelbereich von im wesentlichen 180° erstrecken, liegen.

Die Finnen 8, 9 weisen abgekantete Endbereiche 35 und mittlere Profilierungen 36 auf.

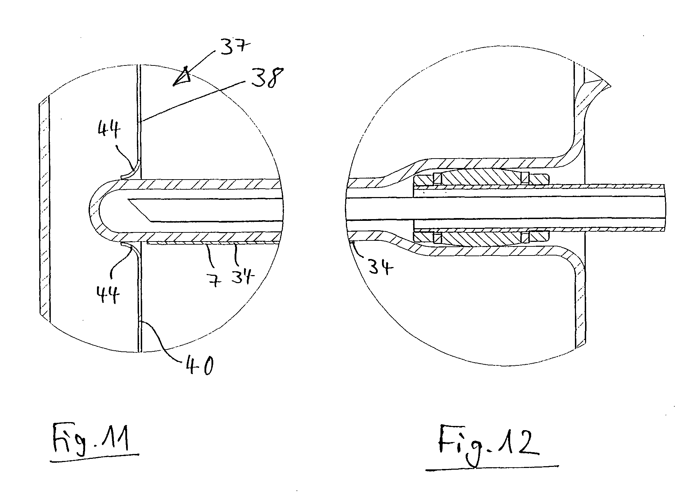

Im Bereich des inneren Endes des zentralen Rohres 4 ist ein Halter 37 vorgesehen, der das zentrale Rohr 4 einfaßt und der vier gleichmäßig über den Umfang verteilte Haltearme 38, 39, 40, 41 aufweist, die sich nach außen verjüngen und deren Enden an der Innenfläche des Rohrkörpers 3 anliegen. Zwei Haltearme, nämlich die einander gegenüberliegenden Haltearme 39 und 41, weisen jeweils zwei Laschen 42 auf, die von den Armen 39, 41 im wesentlichen um 90° abgebogen sind und die zwischen sich die Finnen 8, 9 des Absorbers 2 einfassen. Die Profilierungen 36 liegen in der aus Fig. 10 ersichtlichen Weise an den unteren Laschen 42 der Arme 39, 41 an. Hierdurch wird der Absorber 2 zuverlässig fixiert.

An den äußeren Enden der Arme 38 - 41 sind ebenfalls Abkantungen 43 vorgesehen, um die Anlage an dem Rohrkörper 3 zu verbessern. Die mittlere Öffnung des Halters 37 weist eine Abrundung 44 auf, deren Endbereich an dem zentralen Rohr 4 anliegt.

In den Fig. 14 - 16 ist eine dritte Ausführungsform gezeigt, die teilweise mit den oben erläuterten Ausführungsformen übereinstimmt, so daß nachfolgend nur die abweichenden Teile erläutert werden. Wie bei der zweiten Ausführungsform ist der Halter 37 als Zentrierstern ausgebildet. Die äußeren Enden der Arme 38 - 41 weisen keine Abkantungen, sondern Abrundungen 45 auf, die, vorzugsweise unter Vorspannung, an der Innenseite des Rohrkörpers 3 anliegen.

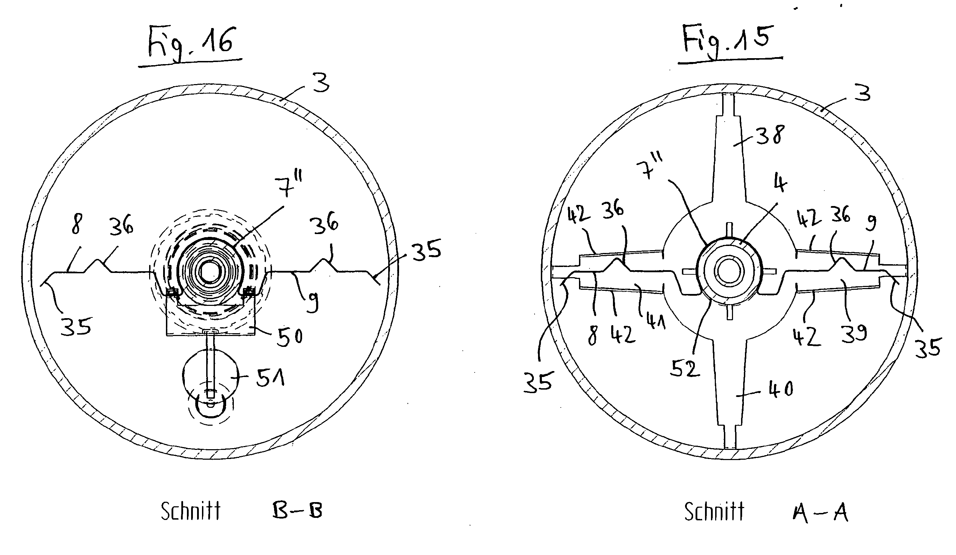

Wie insbesondere aus Fig. 15 und 16 ersichtlich, erstreckt sich das Absorberrohr 7" über einen Winkelbereich von mehr als 180°. Der Querschnitt des Absorbers hat die Form des griechischen Buchstabens Ω. Bei der Montage kann das Absorberrohr 7" auf das zentrale Rohr 4 aufgedrückt werden. Hierbei weitet sich das Absorberrohr 7" auf. Es schnappt anschließend wieder in seine ursprüngliche Lage zurück, wie in Fig. 15 und 16 gezeigt, in der es das zentrale Rohr 4 zuverlässig umschließt. Der Winkelbereich, über den sich das zentrale Rohr 7" erstreckt, ist derart bemessen, daß es noch über das zentrale Rohr 4 gedrückt werden kann und daß es dort zuverlässig festgehalten wird. Vorzugsweise liegt dieser Winkelbereich zwischen 200 und 270°.

Wie aus Fig. 14 ersichtlich ist in Verlängerung des zentralen Rohres 4 ein Anschlußteil 46 vorgesehen, das im wesentlichen zylinderförmig ist und dessen Durchmesser etwas größer ist als derjenige des zentralen Rohres 4. Das Anschlußteil 46 weist ein Außengewinde auf, auf das eine Kappe 47 aufgeschraubt ist, die einen Anschlußstutzen 31' einklemmt. Die Kappe 47 ist durch eine Dichtung 48 gegenüber dem Anschlußteil 46 abgedichtet. Die Dichtung 48 befindet sich zwischen der äußeren Stirnfläche des Anschlußteils 46 und einem Endteil des Anschlußstutzens 31'. Das Endteil des Anschlußstutzens 31' ist zwischen der Dichtung 48 und einer nach innen weisenden Einziehung der Kappe 47 eingeklemmt. Das Anschlußteil 46 ist mit dem Glaskörper 1 einstückig. Das Rohr 13 aus Kupfer, durch welches das Wärmeträgermedium strömt, führt unter Bildung eines Ringraums durch den Anschlußstutzen 31' in das zentrale Rohr 4 hinein. Es ist dort mit einem weiteren Rohr 49 verbunden, an dessen Ende das Wärmeträgermedium ausströmt (ähnlich wie in Fig. 4) und über den Ringraum zwischen dem Rohr 49 und dem zentralen Rohr 4 und anschließend zwischen dem Rohr 13 und dem zentralen Rohr 4 zurückströmt. Das Wärmeträgermedium strömt anschließend durch den Ringraum zwischen dem Rohr 13 und dem Anschlußteil 46 und zwischen dem Rohr 13 und dem Anschlußstutzen 31' heraus.

Der Absorber umfaßt ferner einen Getterhalter 50, an dem ein Getter 51 vorgesehen ist. Der Getter 51 kann induktiv gezündet werden, wodurch das Vakuum in dem Glaskörper 1 erhöht wird. Das in dem Getter 51 enthaltene Barium setzt sich durch die Zündung an den Innenseiten der Glaswände fest und macht sich dort als Verspiegelung bemerkbar.

Zwischen dem zentralen Rohr 4 und dem Absorberrohr 7" ist eine Wärmeleitfolie 52 vorgesehen, die den Wärmeübergang beschleunigt und verbessert.

Wie bereits erläutert ist das Absorberrohr 7" gerollt und vorgespannt. Dies gewährleistet, daß das zentrale Rohr 4 mit Druck in die Omegaform des Absorbers hineingedrückt werden kann und mittels der Vorspannung des Ω dauerhaft unter Druck bzw. Spannung gehalten werden kann.

## Patentansprüche

1. Vakuum-Solarröhre
mit einem Glaskörper (1), der einen Rohrkörper (3), ein zentrales Rohr (4), eine hintere Endfläche (5) und eine vordere Endfläche (6) umfasst,
und mit einem Absorber (2), der das zentrale Rohr (4) umschließt.

2. Vakuum-Solarröhre nach Anspruch 1, **dadurch gekennzeichnet, dass** der Absorber ein Absorberrohr (7, 7', 7") umfasst.

3. Vakumm-Solarröhre nach Anspruch 2, **dadurch gekennzeichnet, dass** das Absorberrohr (7, 7', 7") geschlitzt (10) und/oder durchbrochen (33, 34) ist und/oder sich über einen Winkelbereich von mehr als 180° erstreckt.

4. Vakuum-Solarröhre nach einem der vorhergehenden Ansprüche, **dadurch gekennzeichnet, dass** der Absorber (2) eine oder mehrere Finnen (8, 9) umfasst.

5. Vakuum-Solarröhre nach einem der vorhergehenden Ansprüche, **gekennzeichnet durch** eine oder mehrere Klammern (17), die den Absorber (2) oder das Absorberrohr (7) umgreifen und an dem Rohrkörper (3) anliegen (18, 19, 20), wobei die Klammern (17) vorzugsweise **durch** eine oder mehrere Finnen (8, 9) hindurchgeführt (21, 22) sind.

6. Vakuum-Solarröhre nach einem der vorhergehenden Ansprüche, **gekennzeichnet durch** einen Halter (37), der den Absorber (2) oder dessen Finnen (8, 9) einfaßt und der an dem Rohrkörper (3) anliegt.

7. Vakuum-Solarröhre nach Anspruch 6, **dadurch gekennzeichnet, daß** der Halter (37) mehere Haltearme (38, 39, 40, 41) aufweist, deren Enden vorzugsweise Laschen (42) aufweisen.

8. Vakuum-Solarröhre nach einem der vorhergehenden Ansprüche, **dadurch gekennzeichnet, dass** in das Ende (24) des zentralen Rohres (4) ein Anschlussstück (25) eingesetzt ist, das vorzugsweise in das Ende (24) des zentralen Rohres (4) einklemmbar ist.

9. Vakuum-Solarröhre nach Anspruch 8, **dadurch gekennzeichnet, dass** das Anschlussstück (25) einen aufweitbaren Schlauch (27) umfaßt, der vorzugsweise zwischen einem Anschlag (26) und einer Mutter (28) vorgesehen ist.

10. Vakuum-Solarröhre nach einem der vorhergehenden Ansprüche, **dadurch gekennzeichnet, daß** in Verlängerung des zentralen Rohres (4) ein Anschlußteil (46) vorgesehen ist.
